# EUROPEAN PATENT APPLICATION

(11) **EP 4 763 821 A1**
(43) Date of publication of application: **24.06.2026**
(21) Application number: 24386147.3
(22) Date of filing: 20.12.2024
(51) Int. Cl.: C03C 21/00, C03C 23/00

(54) **STRENGTHENED COVERS FOR ELECTRONIC DEVICES**

(71) Applicant: Apple Inc., Cupertino, CA 95014 (US)
(72) Inventor: Gutwald, Matthew J, Cupertino, CA 95014 (US); Limarga, Andi M, Cupertino, CA 95014 (US); Vangelatos, Zacharias, Cupertino, CA 95014 (US); Nguyen, Que Anh S, Cupertino, CA 95014 (US)
(74) Representative: Rooney, John-Paul

(57) **Abstract**

Strengthened covers (120) for electronic devices (100) are disclosed herein. A cover member (130) pof the device may be strengthened by ion exchange combined with ion implantation to provide both impact and bending resistance.

## Description

### FIELD

The described embodiments relate generally to strengthened covers for electronic devices and electronic devices including these covers. More particularly, the present embodiments relate to covers strengthened by ion exchange and ion implantation, and portable electronic devices including these covers.

### BACKGROUND

Some conventional devices include a display that may be protected by a transparent component that protects the display from external elements. In some instances, the transparent component is formed from a glass material or plastic material. While glass provides increased scratch resistance and other beneficial properties, glass may be less resistant to impact. The systems and techniques described herein are directed to glass covers having been strengthened to provide improvements in mechanical properties, which may include improved impact resistance.

### SUMMARY

Aspects of the following disclosure relate to a cover for an electronic device that is strengthened to provide impact resistance. The cover may be positioned over the display of the device or may form another portion of the enclosure. In some cases, the cover includes a cover member formed from a glass or glass ceramic material that is strengthened though formation of a compressive stress layer that provides impact resistance.

In some cases, the compressive stress layer may provide impact resistance through providing a deep depth of compression and a high maximum compressive stress. The deep depth of compression may be deep enough to provide resistance to crack formation and/or propagation. The high compressive stress near a surface of the cover member may provide resistance to bending of that surface. In some examples, the cover and the cover member are positioned over a display and/or an optical sensor of a portable electronic device.

In some aspects, the cover member is strengthened both by ion exchange and ion implantation. The one or more ion exchange operations may provide the deep depth of compression. The one or more ion implantation operations may provide a high compressive stress near the surface of the cover member.

The disclosure provides an electronic device comprising a display, a cover positioned over the display and comprising a cover member formed from an ion-exchangeable silicate material comprising lithium ions, the cover member comprising a first compressive stress region extending from an exterior surface of the cover member to a first depth, the first compressive stress region including a first concentration of sodium ions and a first concentration of alkali metal ions that are larger than potassium ions and that are embedded in the cover member and a second compressive stress region extending inward from the first compressive stress region to a second depth, the second compressive stress region including a second concentration of the sodium ions and substantially free of the alkali metal ions.

Alternately or additionally, the disclosure provides an electronic device comprising a housing, a cover coupled to the housing and comprising a cover member formed from an alkali aluminosilicate material, the cover member comprising an ion-modified layer comprising a first region extending from a surface of the cover member to an implantation depth of alkali metal ions that are larger than potassium ions, the first region including the alkali metal ions and a first concentration of sodium ions and a second region extending from the first region to a layer depth of the ion-modified layer and comprising a second concentration of the sodium ions and a core region extending from the second region and comprising lithium ions and a display positioned under the cover member.

Alternately or additionally, the disclosure provides an electronic device comprising a display, a housing, a cover coupled to the housing, positioned over the display, and comprising a cover member formed from an ion-exchangeable silicate material, the cover member comprising a first compressive stress layer extending from an exterior surface of the cover member to a first depth of compression, the first compressive stress layer defining a first compressive stress at the exterior surface and comprising a first set of alkali metal ions that are larger than potassium ions, the first set of alkali metal ions defining a first implantation depth within the cover member that is less than the first depth of compression and a first set of sodium ions, and a second compressive stress layer extending from an interior surface of the cover member to a second depth of compression, the interior surface opposite the exterior surface and the second compressive stress layer defining a second compressive stress at the interior surface and comprising a second set of the alkali metal ions defining a second implantation depth within the cover member that is less than the second depth of compression and a second set of sodium ions, and a tensile stress region positioned between the first and the second compressive stress layers and comprising lithium ions.

### BRIEF DESCRIPTION OF THE DRAWINGS

The disclosure will be readily understood by the following detailed description in conjunction with the accompanying drawings, wherein like reference numerals designate like elements.
FIG. 1A shows a front perspective view of an example electronic device.
FIG. 1B shows a rear perspective view of the electronic device of FIG. 1A.
FIG. 2 shows an example cover member for an electronic device.
FIG. 3 shows an example of a strengthened cover member.
FIG. 4 shows an example of a front perspective view of another example electronic device.
FIG. 5 shows an example of a cross-sectional view of an electronic device.
FIG. 6A shows an example cross-sectional view of ion-modified layers in a cover member.
FIG. 6B shows an example of an enlarged view of FIG. 6A.
FIG. 7A shows a cross-sectional view of a compressive stress layers in a cover member.
FIG. 7B shows an example of an enlarged view of FIG. 7A.
FIG. 8A shows an example of a compressive stress profile formed by ion exchange.
FIG. 8B shows an example of a compressive stress profile formed by ion exchange and ion implantation.
FIG. 9A shows an example of symmetric compressive stress profiles in a cover member.
FIG.9B shows another an example of asymmetric compressive stress profiles in a cover member.
FIG. 10 shows a cross-sectional view of a contoured cover member.
FIG. 11 shows an example of an internal stress distribution in a peripheral portion of a contoured cover member.
FIG. 12 shows another example of an internal stress distribution in a peripheral portion of a contoured cover member.
FIG. 13 shows an example block diagram of components of an electronic device.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred implementation. To the contrary, the described embodiments are intended to cover alternatives, modifications, and equivalents as can be included within the spirit and scope of the disclosure and as defined by the appended claims.

As described herein, a portable electronic device may include a sheet of glass or glass article that is positioned over the device display, also referred to as "cover glass." Aspects of the following disclosure relate to a cover for an electronic device that is strengthened to provide impact resistance. The cover may be positioned over the display of the device or may form another portion of the enclosure. In some cases, the cover includes a cover member formed from a glass or glass ceramic material. In some examples, the cover and the cover member are positioned over a display and/or an optical sensor of a portable electronic device.

In some aspects, at least a portion of the cover member is strengthened by a process that include an ion exchange operation and an ion implantation operation. The strengthening process may produce a compressive stress layer that extends from at least one surface of the cover member and that provides impact resistance to the cover member. The impact resistance may include a combination of crack resistance and bending resistance. A compressive stress profile of the compressive stress layer may have relatively large depth of compression in order to provide crack resistance. The compressive stress profile may also have a relatively high near surface compressive stress to provide bending resistance.

In some embodiments, including at least one ion implantation operation in the strengthening process increases the surface compressive stress as compared to a strengthening process that does not include an ion implantation operation. For example, the surface compressive stress obtained using an ion implantation operation in combination with an ion exchange operation may be from two to five times greater than the surface compressive stress that would be obtained using only an ion exchange operation. The compressive stress layer produced by a process that includes at least one ion exchange operation and at least one ion implantation operation may therefore provide both relatively high compressive stress and relatively large depth of compression.

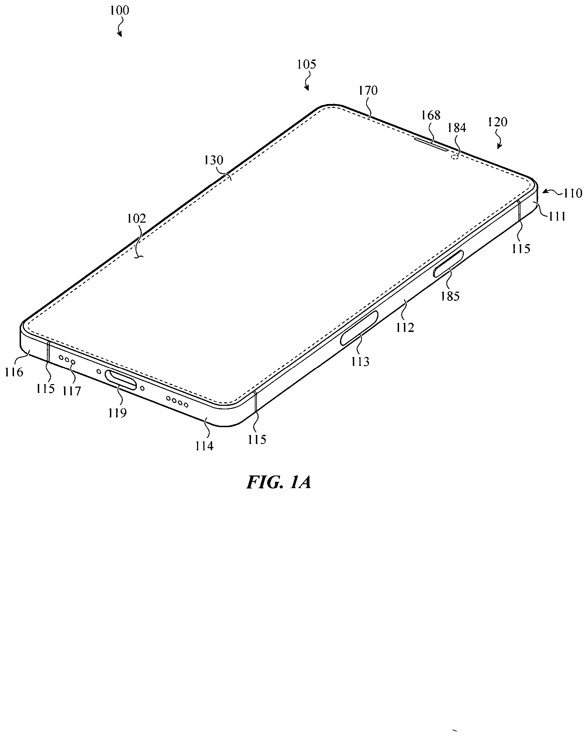

These and other embodiments are discussed below with reference to FIGs. 1A - 13. However, those skilled in the art will readily appreciate that the detailed description given herein with respect to these figures is for explanatory purposes only and should not be construed as limiting.

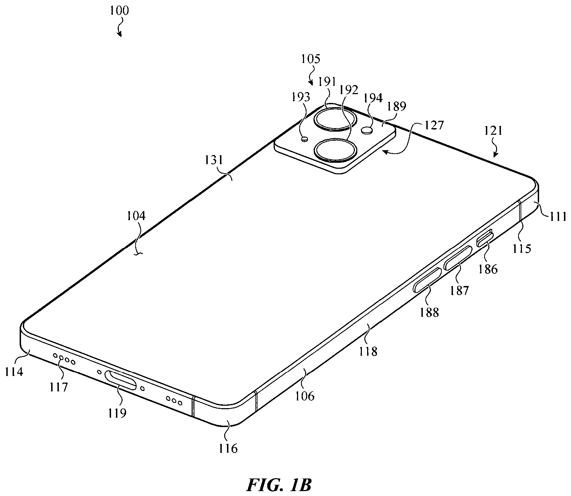

FIG. 1A shows a front perspective view and FIG. 1B shows a rear perspective view of an example electronic device 100. The electronic device 100 may be a mobile telephone (also referred to as a mobile phone). In other examples, the electronic device may have the form of a tablet computer, a laptop computer, a display monitor, a wearable electronic device (e.g., a smart watch or a headset), or another form of electronic device.

The electronic device 100 includes an enclosure 105. The enclosure 105 includes a housing 1 10, a front cover 120, and a rear cover 121. In some examples, the front cover 120 has a contoured shape and a cover member included in the front cover 120 also has a contoured shape.

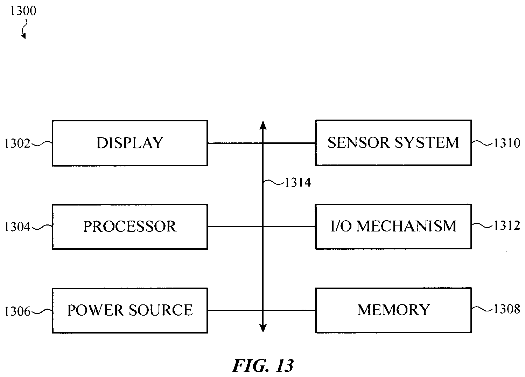

The enclosure 105 defines an internal cavity into which one or more device components is placed. Therefore, the enclosure 105 at least partially encloses one or more device components. The electronic device 100 includes a display assembly 170 and a rear sensor assembly 189. The electronic device 100 also includes a front-facing camera and/or a front-facing biometric sensor 184, which may be an optical sensor, and/or all or some of the other device components described with respect to FIG. 13. For example, the electronic device may include one or more of a display assembly, a processor, a power source, a sensor system (e.g., an optical sensor system), an input/output mechanism, a wireless communication or charging component, or a memory. The electronic device may also include electronic circuitry operably connected to the device components.

As shown in the example FIG. 1A, the front cover 120 is positioned over the display assembly 170. The display assembly may include a touch sensitive layer. In some embodiments, the display assembly is an organic light-emitting diode (OLED) display assembly or an active layer organic light-emitting diode (AMOLED) display assembly. In other embodiments, the display assembly is a liquid-crystal (LCD) assembly, a light-emitting diode (LED) display assembly, or an LED-backlit LCD display assembly.

The front cover defines at least a portion of a front surface 102 of the electronic device. The front cover 120 defines an opening 168, which may allow input to a microphone or another device component. The cover 120 includes a cover member 130. The cover member may include or be formed of any of the materials described below with respect to the cover member 230. The cover 120 may also include a surface coating disposed over an exterior surface of the cover member 130, such as an anti-reflective coating and/or an anti-smudge (e.g., oleophobic) coating. The cover 120 may also include a coating disposed over an interior surface of the cover member 130. As examples, this interior coating may provide a decorative effect and/or provide a masking function.

As shown in the example of FIG. 1B, the electronic device 100 includes a set of rear sensors 189. The set of rear sensors 189 include multiple cameras 191 and 192. The electronic device 100 also includes components 193 and 194, which may be a light source, a sensor such as a depth sensor, or any other suitable component. At least a portion of the rear sensor assembly is positioned under the rear cover 121.

The rear cover 121 defines at least a portion of a rear surface 104 of the electronic device. The cover 121 includes a cover member 131. In the example of FIG. 1B, the rear cover 121 defines protruding portion 127 at the location of the rear sensor assembly 189. The protruding portion 127 may define a set of openings and one or more components of the set of rear sensors and/or other components of the electronic device may extend at least partially through an opening of the set of openings. In some examples the cover member 131 defines the protruding portion 127. In other examples, the protruding portion 127 may be defined by multiple cover members, one of which is the cover member 131. In some embodiments, the rear cover 121 may be positioned over a display, which may be an additional display.

The cover member 131 may include or be formed of any of the materials described below with respect to the cover member 230. The cover 121 may also include a surface coating disposed over an exterior surface of the cover member 131, such as an anti-reflective coating and/or an anti-smudge (e.g., oleophobic) coating. The cover 121 may also include a coating disposed over an interior surface of the cover member 131. As examples, this interior coating may provide a decorative effect and/or provide a masking function.

Each of the front cover member 130, the rear cover member 131, the front cover 120 and the rear cover 121 may define any of a variety of surface textures. In some examples, the rear cover member 131 may have a texture that has a higher amplitude (alternately, height), about the same amplitude, and/or a lower amplitude than the anti-glare texture of the front cover member 130. In some cases, the rear cover member 131 may have a combination of surface textures.

The housing 110 of the electronic device 100 is coupled to each of the front cover 120 and the rear cover 121. The housing 110 includes input devices 185, 186, 187, and 188. In the example of FIGs. 1A and 1B, each of the input devices may be a push button, a touch-activated button, or the like. The example of FIGs. 1A and 1B is not limiting and in other examples, the electronic device 100 may include an input device in the form of a dial, a crown, a wheel, or the like. The housing 110 also includes a window 113 that may facilitate transmission of a wireless communication signal. The housing 110 also defines openings to facilitate input to the electronic device. The openings 117 may allow input to a microphone and/or may allow output from a speaker. The opening 119 may define a port. In some cases, the housing 110 is formed of a metal material or includes one or more members formed from a metal material. Examples of metal materials suitable for the housing 110 include an iron-based alloy (e.g., steel), a titanium-based alloy, an aluminum-based alloy, a magnesium-based alloy, or the like. In other cases, the housing 110 is formed from or includes one or more members formed from a glass, a glass ceramic, or a ceramic material.

In the example of FIGs. 1A and 1B, the housing 110 is formed from multiple members, such as the members 111, 112, 114, 116, and 118. In some embodiments, the members 111, 112, 114, 116, and 118 are metal members that are separated by dielectric members 115 (e.g., polymer or polymer composite members). The dielectric members can provide electrical isolation between adjacent metal members. One or more of the metal members may be coupled to internal circuitry of the electronic device 100 and may function as an antenna for sending and receiving wireless communication. The housing 110 may define a side surface 106 of the electronic device and each of the metal members and the dielectric members may define a respective portion of the side surface. The example of FIGs. 1A and 1B is not intended to be limiting and other configurations may be suitable.

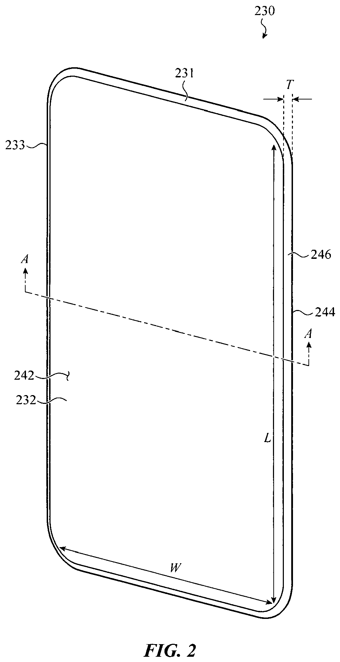

FIG. 2 shows an example cover member for an electronic device. In some examples, the cover member 230 is positioned over one or more of a display, a camera, or a set of sensors of the electronic device. The cover member 230 defines an exterior surface 242, an interior surface 244, and a side surface 246. When the cover member is assembled with other components of the enclosure, the interior surface 244 of the cover member 230 may at least partially define an interior surface of the enclosure.

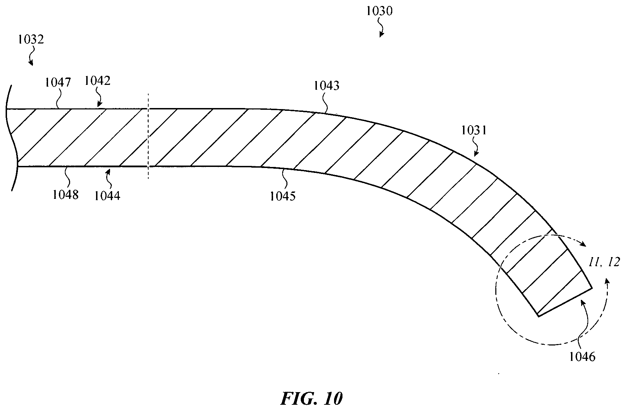

The cover member 230 defines a periphery 233. As shown in the example of FIG. 2, the cover member 230 includes a central portion 232 and a peripheral portion 231 that defines the periphery 233. In the example of FIG. 2, the peripheral portion 231 entirely surrounds the central portion 232. In some cases, the central portion 232 is substantially flat and the peripheral portion 231 is curved, examples of which is shown at least in the cross-sectional view of FIG. 10. The central portion 232 may define a greater area of one or more surfaces of the cover member than the peripheral portion 231. The cover member 230 has a thickness, T, a length, L, and a width, W. The dimensions of the cover member 230 are suited to the electronic device. In some cases, the cover member 230 may have a thickness greater than 500 micrometers to 5 mm, from 400 micrometers to 3 mm, or from 200 micrometers to 1 mm.

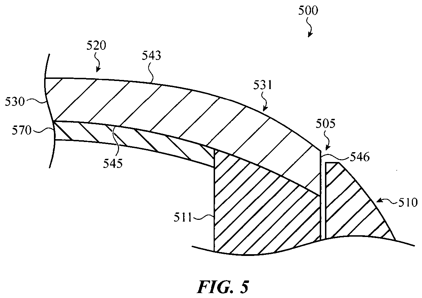

In some embodiments, the cover member 230 has a three-dimensional or contoured shape other than a flat sheet. For example, the cover member 230 may have a contoured shape. In some cases, the cover member 230 includes a peripheral portion that defines one or more curved surfaces and therefore may alternately be referred to herein as a curved peripheral portion. In some examples, each of an exterior and an interior surface of the curved peripheral portion of cover member defines a curved profile or contoured shape. The exterior surface may define a convex curved profile and the interior surface may define a concave curved profile, so that the curved peripheral portion curves towards an interior of an enclosure of the electronic device. The curved peripheral portion may extend from another portion of the cover member that is substantially flat, such as a central portion of the cover member. The display or another component of the electronic device may be positioned in the interior of the enclosure. Examples of cover members defining a curved profile are shown in FIGs. 5 and 10 and the description provided with respect to these figures is generally applicable herein.

The cover member 230 may include an ion-exchangeable material, such as a glass material or a glass ceramic material. The ion-exchangeable material may be a silicate material. The silicate material may be an alkali aluminosilicate material, such as aluminosilicate material including lithium ions. In some embodiments, the cover member 230 is a glass cover member that is formed of a silicate glass material. In other embodiments, the cover member 230 may be formed of a silicate glass ceramic material. In some cases, the cover member 230 may have a laminate structure that includes one or more layers of a glass material, a glass ceramic material, and/or a polymer material. In some cases, an exterior layer of a laminate structure may be formed of a glass and/or glass ceramic material while in other cases the exterior layer of the laminate structure may be formed of a polymer material. In some embodiments, the glass material or glass ceramic material may be sufficiently transparent for use over a display and/or an optical sensor. In some cases, the glass material or the glass ceramic material may have a transmittance of at least 80% over an operating wavelength range of the display or sensor. In some examples, the operating wavelength range may be a visible wavelength range and/or an infrared wavelength range.

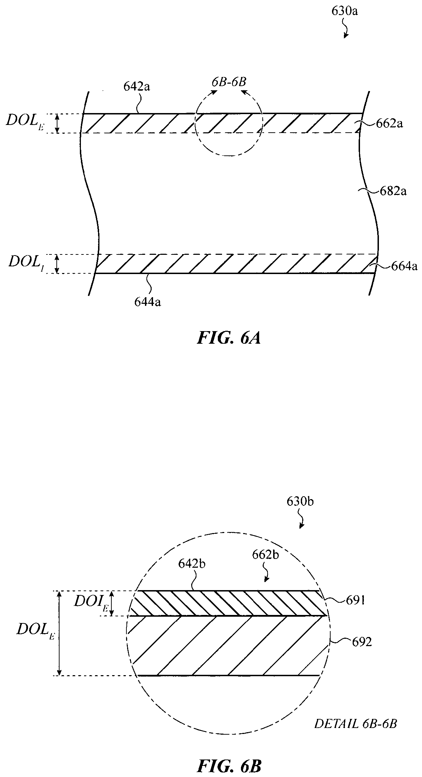

In some embodiments, the strengthened cover member 230 is produced by a process that performs one or more ion exchange operations and one or more ion implantation operations on a substrate of an ion-exchangeable material. Each of the one or more ion exchange operations and the one or more ion implantation operations may modify the composition of the substrate. The process may form an ion-modified layer extending from one or more surfaces of the strengthened cover member. The modification of the ion composition within the ion-modified layer may produce compressive stress within the layer, as described in more detail with respect to FIGs. 6-9. The description provided with respect to FIGs. 6-9 is generally applicable herein and is not repeated here.

The strengthening process typically includes at least one operation in which smaller ions in the ion-exchangeable material are exchanged for larger ions, thereby producing an ion-exchanged layer. For example, if the glass material comprises sodium ions, the sodium ions may be exchanged for potassium ions. Similarly, if the ion-exchangeable material comprises lithium ions, the lithium ions may be exchanged for sodium ions and/or potassium ions. In some embodiments, the ion-exchanged layer extends over the exterior, the interior, and the interior surface of the substrate.

The strengthening process typically also includes at least one ion implantation operation in addition to the at least one ion exchange operation. The ion implantation operation typically modifies the composition within the ion-exchanged layer. In some embodiments, the ion implantation operation implants ions that are larger than the ions(s) that are introduced during the ion exchange operation(s). The implanted ions may alternately be referred to as embedded ions. In some cases, the relative size of an ion may be determined based on the ionic radius of that ion relative to the ionic radius of another ion. In some cases, the ion implantation operation implants ions that have an ionic radius that is larger than that of potassium. For example, the implantation operation may implant alkali metal ions such as rubidium ions (e.g., Rb⁺) and/or cesium ions (e.g., Cs⁺). The ions introduced by implantation may be concentrated near the surface of the cover member. In some cases, the ions may be implanted to a depth is greater than zero and less than or equal to 0.5 micrometers, greater than zero and less than or equal to 1 micrometer, greater than zero and less than or equal to 2 micrometers, greater than zero and less than or equal to 5 micrometers, greater than zero and less than or equal to 10 micrometers, greater than zero and less than or equal to 20 micrometers, or greater than zero and less than or equal to 50 micrometers.

In some embodiments, an ion implantation operation may define a maximum depth from the surface, alternately referred to herein as an implantation depth, of the implanted ions. In some embodiments, the implantation depth is in a range from greater than zero to 0.5 micrometers, in a range from greater than zero to 1.0 micrometer, in a range greater than zero to 2.0 micrometers, in a range from greater than zero to 5 micrometers, in a range from 0.25 micrometers to 5 micrometers, in a range from greater than zero to 10 micrometers, in a range from 0.25 micrometers to 10 micrometers, in a range from 0.5 micrometers to 10 micrometers, in a range from greater than zero to 20 micrometers, in a range from 0.5 micrometers to 20 micrometers, in a range from 1 micrometer to 20 micrometers, in a range from 1 micrometer to 50 micrometers, or in a range from 2 micrometers to 50 micrometers. The additional description provided regarding ions introduced by implantation with respect to FIGs. 6A through 7B is generally applicable herein and is not repeated here.

In some embodiments, the strengthening process produces an ion-modified layer that extends from each of the exterior surface 242, the interior surface 244, and the side surface 246 of the cover member. In some cases, the ion-modified layer may be substantially uniform over all the surfaces of the cover member. In these cases, the resulting strengthening of the cover member may be substantially uniform. In other cases, the ion-modified layer may vary over the cover member. In some examples, the strengthening provided at the exterior surface 242 may be different than the strengthening provided at the interior surface 244 and/or the side surface 246. For example, the strengthening provided at the exterior surface 242 may be similar to the strengthening provided at interior surface 244, but the strengthening provided at the side surface 246 may be greater. In some embodiments, the strengthening process strengthens different zones of the cover member differently, as explained in more detail below.

The variation in the ion-modified layer and the variation in the resulting strengthening may obtained in several ways. In some examples, the cover member may be selectively exposed to an ion-exchange medium by masking other regions of the cover member or by selectively applying the ion-exchange medium and/or a source of energy to enhance the ion-exchange. Alternately or additionally, the cover member may be selectively implanted with ions.

The compressive stress layer produced by the strengthening process may define a surface compressive stress. In some embodiments, including at least one ion implantation operation in the strengthening process increases the surface compressive stress as compared to a strengthening process that does not include an ion implantation operation. The compressive stress layer produced by a process that includes at least one ion exchange operation and at least one ion implantation operation may therefore provide both relatively high compressive stress and relatively large depth of compression. In some embodiments, the surface compressive stress produced using the methods described herein is greater than 500 MPa or greater than 1 GPa. In some examples, the surface compressive stress may be greater than 500 MPa for a glass ceramic material or greater than 1 GPa for a glass material.

The stress profile across a thickness of the cover member may be symmetric or asymmetric. In some embodiments, the stress profile is symmetric across the thickness of the cover member. In some cases, the depth of compression from an exterior surface and the depth of compression from an interior surface of the cover member is substantially the same. In some embodiments, when the cover member is symmetrically strengthened the depth of compression may be in a range from 15% to 30% of a thickness of the cover member. The compressive stress at the exterior surface and the compressive stress at the interior surface may also be substantially the same.

In other embodiments, the stress profile is asymmetric across the thickness of the cover member. In some cases, the depth of compression may be different at different surfaces of the cover member. For example, a first compressive stress layer extending from a first surface of the cover member may be formed by at least one ion exchange operation and at least one ion implantation operation while a second compressive stress layer extending from a second surface of the cover member may be formed solely by one or more ion implantation operations. In this example, the depth of compression of the first portion of the compressive stress layer may be greater than the depth of compression of the second portion of the compressive stress layer. In some examples when the cover member is asymmetrically strengthened the deeper compressive stress layer may have a depth of compression in a range that is greater than or equal to 30% or less than or equal to 60 % of a thickness of the cover member.

Alternately or additionally the surface compressive stress may be different at different surfaces of the cover member when the cover member has an asymmetric stress profile. In an example where the first compressive stress layer extending from the first surface is formed by an ion exchange operation and an ion implantation operation and the second compressive stress layer extending from the second surface is formed solely by an ion exchange operation, the first compressive stress layer may have a higher surface compressive stress than the second compressive stress layer.

In some embodiments, an ion implantation operation as described herein may affect a level of birefringence of the cover member when applied locally to regions to a cover member. In some cases, the process of strengthening the substate may include an additional operation, such as a thermal treatment operation, to reduce the level of birefringence. In cases where these regions are covered with a coating that reduces light transmission, such as an ink layer, an additional thermal treatment may not be needed.

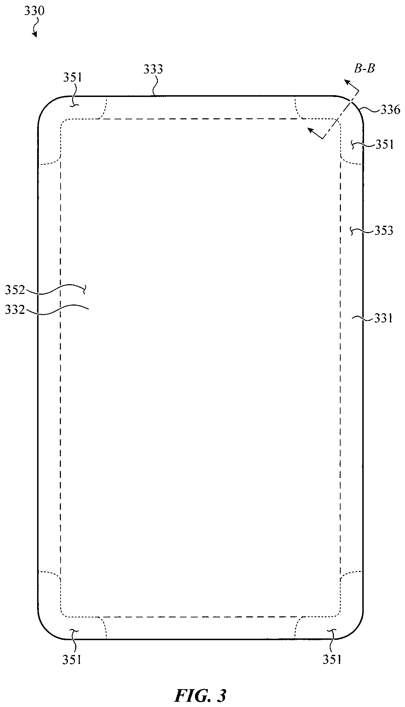

FIG. 3 shows an example of a strengthened member. The cover member 330 includes strengthened peripheral zones 351 and 353. The cover member 330 also includes another strengthened zone 352. In some embodiments, the strengthened peripheral zones 351 and 353 are positioned within a curved peripheral portion 331 of the cover member. The strengthened zone 352 may be positioned within a central portion 332 of the cover member.

The peripheral portion 331 defines the periphery 333 of the cover member 330. The periphery 333 in turn defines corners 336. The peripheral portion 331 may define curved exterior and interior surfaces and these surfaces may have any of the curved shapes described herein, including the shapes described with respect to the curved peripheral portions of FIG. 10. The example of FIG. 3 is not intended to be limiting and in other examples the cover member need not define any corners or need not define four corners. The cover member 330 may be similar in thickness, materials, and other properties to the cover member 230.

As shown in the example of FIG. 3, each strengthened peripheral zone 351 of the set of strengthened peripheral zones 351 includes a respective corner 336 of the set of corners 336. Each strengthened peripheral zone 353 is positioned between a pair of strengthened peripheral zones 351. In some embodiments, each of the strengthened peripheral zones 351 and 353 and the strengthened zone 352 are strengthened by ion exchange. One or more of the strengthened zones 351, 352, and 333 may be additionally strengthened by ion implantation.

In some embodiments, the strengthening of the cover member is substantially the same in each of the strengthened zones 351, 352, and 333. In other embodiments, the strengthened peripheral zone 351 is strengthened differently from the strengthened zone 352. In some cases, the strengthened peripheral zone 351 may be strengthened similarly to the strengthened peripheral zone 333 so that the strengthening of the cover member is substantially uniform along the periphery 333. In other cases, the strengthened peripheral zone 333 may be strengthened similarly to the strengthened zone 332.

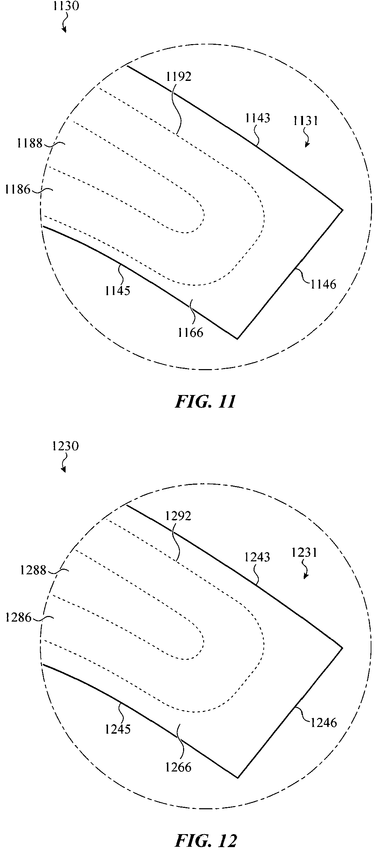

In some embodiments, the strengthening varies within each of the strengthened peripheral zones 351 and 353. In some embodiments, customized strengthening of the strengthened peripheral zones 351 and 353 may allow control of the level and location of maximum tensile stress within the curved peripheral potion while still providing impact resistance. The additional description of customized strengthening provided at least with respect to FIGs. 11 and 12 is generally applicable herein and is not repeated here. In some embodiments, one or more of the strengthened peripheral zones 351 and 353 and the strengthened zone 352 is strengthened using a process that includes at least one ion exchange operation and at least one ion implantation operation.

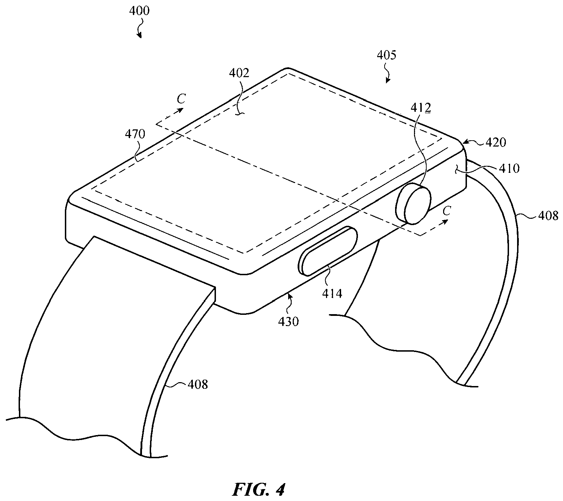

FIG. 4 shows an example of a front perspective view of another example electronic device. The device of FIG. 4 may be a wearable electronic device, such as a watch (e.g., an electronic watch, such as a smartwatch) or another wrist-worn device.

The electronic device 400 includes an enclosure 405. The enclosure includes a housing 410 and a front cover 420 that defines at least a portion of a front surface 402 of the electronic device. The front cover 420 is positioned over a display assembly 470. The enclosure may also include a rear cover that may be positioned over a sensing panel.

In the example of FIG. 4, the cover member 430 is contoured. In some cases, the cover member is shaped so that a central portion of the cover member protrudes with respect to a peripheral portion. Alternately, the central portion of the cover member may be referred to as being offset (e.g., in a vertical direction) with respect to the peripheral portion. The cross-sectional views of FIGs. 5 and 10 show examples of a contoured cover. The cover member430 may include or be formed of any of the ion-exchangeable materials previously described with respect to the cover member 230.

The enclosure 405 defines an internal cavity into which one or more device components is placed. The electronic device 400 includes a display assembly 470 and may also include a rear sensing panel. The electronic device 400 includes an input device 412, which may be a dial having an outer surface configured to receive a rotary input. The electronic device 400 also includes an input device 414, which may be a button configured to receive a touch or press input. A band 408 is attached to the housing 410 and is configured to secure the electronic device to a user.

FIG. 5 shows an example of a cross-sectional view of an electronic device. The cover 520 includes a cover member 530 that defines a contoured shape. In the example of FIG. 5, a peripheral portion 531 of the cover member 530 defines a curved exterior surface 543 and a curved interior surface 545. A display 570 is positioned along the curved interior surface 545 and may be coupled to the curved interior surface 545. The electronic device 500 may be an example of the electronic device 400 of FIG. 4, with the cross-section taken along line C-C in FIG. 4 or may be an example of other electronic devices described herein.

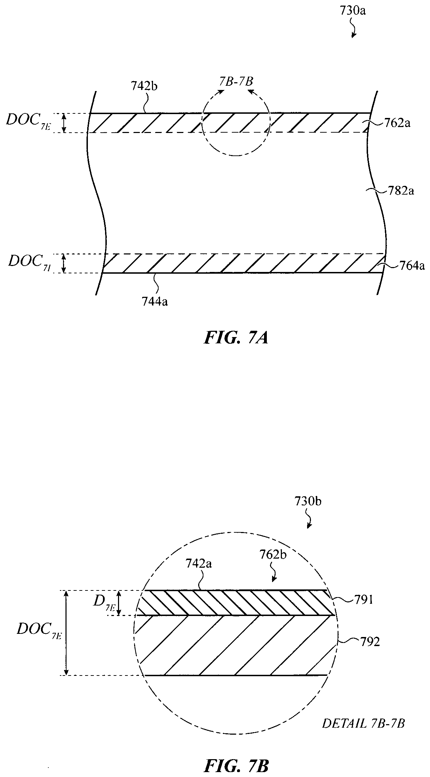

The peripheral portion 531 may be curved and may be strengthened similarly to any of the curved peripheral portions described herein, including the curved peripheral portions of FIGs. 3 and 7. In some cases, the strengthening of the peripheral portion 531 may be customized to produce a greater offset between a tensile stress region and the side surface as compared to a uniformly strengthened peripheral portion 531. Similarly, the strengthening of the peripheral portion 531 may produce a greater offset between the tensile stress region and a transition between an exterior surface and a side surface of the cover member 530.

An enclosure 505 of the electronic device 500 includes the cover 520 and a housing 510. The housing 510 may comprise one or more housing members as described with respect to the housing 110 of FIG. 1A. In the example of FIG. 5, part of the side surface 546 of the cover member 530 protrudes with respect to the housing 110, but this example is not intended to be limiting and in other examples the side surface 546 may be flush with the housing 110 or recessed with respect to the housing 110. The electronic device also includes a support 511 that is provided below the peripheral portion 531 of the cover member 530.

FIG. 6A shows a cross-section view of ion-modified layers in a cover member. The example of FIG. 6A may be an example of a cross-sectional view along line A-A of the cover member 230 of FIG. 2, along line B-B in FIG. 3, or along C-C in FIG. 4. As shown in the example of FIG. 6A, the cover member 630a defines an exterior surface 642a and an ion-modified layer 662a extending from the exterior surface 642a. The cover member 630a further defines an interior surface 644a and an ion-modified layer 664a extending from the interior surface 644a. The cover member 630a also includes a region 682a of unmodified composition between the ion-modified layer 662a and 664a. This region 682a may alternately be referred to herein as a core region of the cover member and the layers 662a and 664a may alternately be referred to as layers of modified composition. Although the example of FIG. 6A shows the ion-modified layers 662a and 664a have a depth that is substantially the same, this example is not intended to be limiting and in other examples layers of modified composition extending from the exterior and interior surfaces need not have the same depth and/or composition profile.

Each of the ion-modified layer 662a and the ion-modified layer 664a may be produced by a process that includes an ion exchange operation and an ion implantation operation. Each of the ion-modified layer 662a and the ion-modified layer 664a may therefore include ions introduced by ion exchange and ions introduced by ion implantation. Each of the ion-modified layer 662a and the ion-modified layer 664a may include a maximum concentration of the ions introduced by ion exchange (e.g., sodium ions). Each of the ion-modified layer 662a and the ion-modified layer 664a may also include a maximum concentration of the ions introduced by ion implantation (e.g., ions having an ionic radius larger than the ions introduced by ion exchange).

FIG. 6B shows an enlarged view of an ion-modified layer produced by ion-exchange followed by ion implantation in a cover member 630b. The ion-modified layer 662b includes a first region 691 that extends from the exterior surface 642b and a second region 692 that extends from the first region 691. In some embodiments, the first region 691 includes the ions introduced by ion implantation and also includes ions that were introduced through ion exchange. The first region 691 may extend from the exterior surface 642b to a first depth DOI_{E}, alternately referred to herein as an implantation depth. The second region 692 includes ions that were introduced through ion exchange but is substantially free of the ions that were introduced by ion implantation.

The ions introduced by ion implantation may have an ionic radius that is larger than that of the ions introduced by ion exchange. In some embodiments, the ion-exchange operation may exchange lithium ions for sodium ions and/or potassium ions. The ions introduced by ion implantation may be alkali metal ions. These alkali metal ions may have an ionic radius that is larger than that of potassium ions, such as rubidium and/or cesium ions. The additional description of ions introduced by ion exchange and ion implantation provided with respect to FIG. 2 is generally applicable herein and is not repeated here.

In some embodiments, the first depth (alternately, implantation depth) of the first region 691 is in a range from greater than zero to 0.5 micrometers, in a range from greater than zero to 1.0 micrometer, in a range greater than zero to 2.0 micrometers, in a range from greater than zero to 5 micrometers, in a range from 0.25 micrometers to 5 micrometers, in a range from greater than zero to 10 micrometers, in a range from 0.25 micrometers to 10 micrometers, in a range from 0.5 micrometers to 10 micrometers, in a range from greater than zero to 20 micrometers, in a range from 0.5 micrometers to 20 micrometers, in a range from 1 micrometer to 20 micrometers, in a range from 1 micrometer to 50 micrometers, or in a range from 2 micrometers to 50 micrometers.

The second region 692 extends from the first region 691 to a second depth DOL_{E} that is the depth of the ion-modified layer, alternately referred to as a layer depth of the ion-modified layer. In some embodiments, where the ion-modified layer 662a and 664a are symmetric, the layer depth may be in a range from 15% to 40% of a thickness of the cover member.

Similarly to the ion-modified layer 662a, the ion-modified layer 664a of FIG. 6A may include a third region that extends from the interior surface 644a and that includes ions introduced by ion implantation and ions that were introduced through ion exchange. The third region may extend to a third depth, which may alternately be referred to as a second implantation depth. The ion-modified layer 644a of FIG. 6A may further include a fourth region that extends from the third region and includes ions that were introduced through ion exchange but is substantially free of the ions that were introduced by ion implantation. The fourth region may extend to a fourth depth DOL_{I} that is the depth of the ion-exchanged layer from the interior surface, alternately referred to herein as a second layer depth.

FIG. 7A shows a cross-sectional view of a compressive stress layers in a cover member. The example of FIG. 7A may be an example of a cross-sectional view along line A-A of the cover member 230 of FIG. 2, along line B-B in FIG. 3, or along C-C in FIG. 4. As shown in the example of FIG. 7A, the cover member 730a defines an exterior surface 742a and a compressive stress layer 762a extending from the exterior surface 742a. The cover member 730a further defines an interior surface 744a and a compressive stress layer 764a extending from the interior surface 744a. A tensile stress zone 782a is positioned between the compressive stress layer 762a and the compressive stress layer 764a.

Each of the compressive stress layer 762a and compressive stress layer 764a may be produced by a process that includes an ion exchange operation and an ion implantation operation. Each of compressive stress layer 762a and compressive stress layer 764a may therefore include ions introduced by ion exchange and ions introduced by ion implantation. In some embodiments, the compressive stress layer 762a includes a first set of alkali ions that are larger than potassium ions and a first set of sodium ions and the compressive stress layer 764a includes a second set of alkali ions that are larger than potassium ions and a second set of sodium ions. Each of the compressive stress layers 762a and 764a may be formed within a respective ion-modified layer, such as the ion-modified layers of FIGs. 6A and 6B. The tensile stress zone 782a may comprise lithium ions.

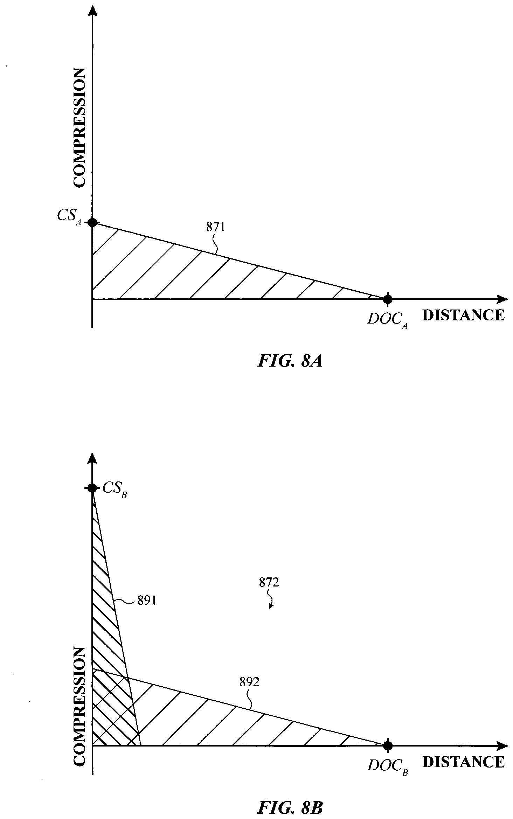

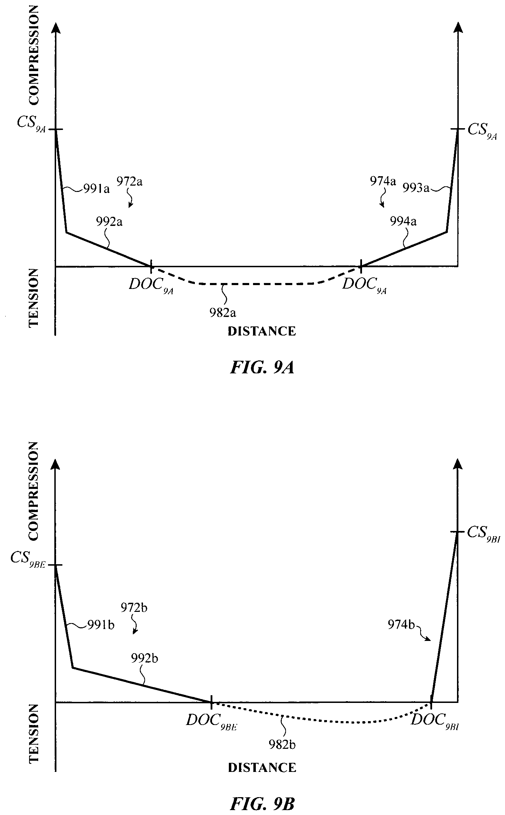

Each of the compressive stress layer 762a and the compressive stress layer 764a defines a respective compressive stress profile, depth of compression, and surface compressive stress. FIGs. 8B, 9A, and 9B show non-limiting examples of a compressive stress profile that may be formed using the strengthening techniques described herein. Although the example of FIG. 7A shows the compressive stress layers 762a and 764a have depths DOC_{7E} and DOC_{7I} that are substantially the same, this example is not intended to be limiting and in other examples compressive stress layers extending from the exterior and interior surfaces need not have the same depth of compression, surface compressive stress and/or compressive stress profile.

FIG. 7B shows an enlarged view of a compressive stress layer produced by ion-exchange followed by ion implantation in a cover member 730b. The compressive stress layer 762b includes a first compressive stress region 791 that extends from the exterior surface 742b to a depth D_{7E} and a second compressive stress region 792 that extends from the first compressive stress region 791 to a depth of compression DOC_{7E}. In some embodiments, the first compressive stress region 791 may be located within a region of an ion-modified layer that includes ions introduced by ion implantation and also includes ions that were introduced through ion exchange, similar to the region 691 of FIG. 6B. The second compressive stress region 792 may be located within a region of an ion-modified layer that primarily include ions that were introduced through ion exchange, similar to the region 692 of FIG. 6B. In some cases, the second compressive stress region 792 may be substantially free of the ions that were introduced by ion implantation.

Similarly to the compressive stress layer 762a, the compressive stress layer 764a of FIG. 7A may include a third compressive stress region that extends from the interior surface 744a and that includes ions introduced by ion implantation and ions that were introduced through ion exchange. The compressive stress layer 764a of FIG. 7a may further include a fourth compressive stress region that extends from the third region and includes ions that were introduced through ion exchange but may be substantially free of the ions that were introduced by ion implantation. The additional description of ions introduced by ion exchange and ion implantation provided with respect to FIGs. 2 and 6A- 6B is generally applicable herein and is not repeated here.

FIGs. 8A and 8B show compressive stress profiles at different stages in the strengthening process that includes an ion exchange operation and an ion implantation operation. FIG. 8A shows an example of a compressive stress profile resulting from an ion exchange operation. The compressive stress profile 871 defines a depth of compression DOC_{A} and a surface compressive stress CS_{A}. In some embodiments, the ion-exchange operation may exchange lithium ions for sodium ions and/or potassium ions, as previously discussed with respect to FIGs. 2 and 6A- 6B.

FIG. 8B shows an example of a compressive stress profile formed by ion exchange followed by ion implantation. The compressive stress profile 872 defines a depth of compression DOCs and a surface compressive stress CS_{B}. The ion-exchange process may be similar to that described with respect to FIG. 8A.

In some embodiments, the ion implantation operation implants ions that have an ionic radius that is larger than that of potassium ions. The ion implantation operation may implant alkali metal ions that have an ionic radius that is larger than the ionic radius of potassium ions. Examples of such alkali metal ions include rubidium ions (e.g., Rb⁺), cesium ions (e.g., Cs⁺), and the like. The additional discussion of ion-implantation operations provided with respect to FIG. 2 and 6A- 6B is generally applicable herein and those details are not repeated here.

The compressive stress profile 872 of FIG. 8B may be an example of a compressive stress profile formed in the compressive stress region of 762a, 762b, or 764a of FIG. 7. The first region 891 of the compressive stress profile 872 may be an example of a region of a compressive stress profile formed in the compressive stress region 791 of FIG. 7B. As previously discussed with respect to FIG. 7B, the region 791 includes ions introduced by ion implantation and also includes ions that were introduced through ion exchange. The second region 892 of the compressive stress profile 872 may be an example of a region of a compressive stress profile formed in the compressive stress region 792 of FIG. 7B. As previously discussed with respect to FIG. 7B, the region 792 primarily includes ions that were introduced through ion exchange and may substantially free of the ions that were introduced by ion implantation.

Therefore, the first region 891 of the compressive stress profile 872 may be determined both by compressive stresses due to ion implantation and compressive stresses due to ion exchange. The second region 892 of the compressive stress profile 872 may be determined by compressive stresses due to ions introduced by ion exchange. When the ions introduced by implantation have an ionic radius that is larger than that of the ions introduced by ion exchange, the compressive stress in the region 891 may be increased as compared to the corresponding region of the compressive stress profile 871 of FIG. 8A. Therefore, the surface compressive stress CS_{B} is larger than the surface compressive stress CS_{A} of FIG. 8A. In some examples, the surface compressive stress obtained using an ion implantation operation in combination with an ion exchange operation may be from two to five times greater than the surface compressive stress that would be obtained using only an ion exchange operation.

The compressive stress profile 872 may provide both crack resistance and bending resistance. The depth of compression DOCs may provide crack resistance while the larger surface compressive stress CS_{B} may provide improved bending resistance as compared to the compressive stress profile 871. In some embodiments, the surface compressive stress produced using the methods described herein is greater than 500 MPa or greater than 1 GPa. In some examples, the surface compressive stress may be greater than 500 MPa for a glass ceramic material or greater than 1 GPa for a glass material. In some embodiments, the depth of compression may be in a range from 15% to 30% of a thickness of a symmetrically strengthened cover member and in a range from greater than or equal to 30% and less than or equal to 60% of a thickness of an asymmetrically strengthened cover member.

FIG. 9A shows an example of symmetric compressive stress profiles in a cover member. Each of the compressive stress profiles 972a and 974a may be formed by a strengthening process that includes ion exchange and ion implantation. Therefore, each of the compressive stress profiles 972a and 974a may provide both crack resistance and bending resistance to the exterior and the interior surfaces of cover member. The compressive stress profile 972a may alternately be referred to as a first compressive stress profile and the compressive stress profile 974a may alternately be referred to as a second compressive stress profile.

The cover member includes a compressive stress profile 972a extending from an exterior surface of the cover member and a compressive stress profile 974a extending from an interior surface of the cover member. In the example of FIG. 9A, the compressive stress profile 974a is substantially the same as the compressive stress profile 972a. For example, each of the compressive stress profiles 972a and 974a defines a surface compressive stress CS_{9A} and a depth of compression DOC_{9A}. In some embodiments, the depth of compression DOC_{9A} may be in a range from 15% to 30% of a thickness of the cover member. The thickness is defined by the distance between the two vertical axes.

The compressive stress profile 972a includes a first region 991a and a second region 992a while the compressive stress profile 974a includes a third region 993a and a fourth region 994a. The first region 991a and the third region 993a may be determined both by compressive stresses due to ion implantation and compressive stresses due to ion exchange, in a similar fashion as previously described with respect to FIG. 8B. The second region 992a and the fourth region 994a may be determined primarily due to compressive stresses due to ion exchange, in a similar fashion as previously described with respect to FIG. 8B. The description provided with respect to FIG. 8B is generally applicable herein.

As shown in FIG. 9A, the first region 991a has similar properties to the third region 993a and the second region 992a has similar properties to the fourth region 994a. The first region 991a defines a first maximum slope and the second region 992a defines a second maximum slope that is less than the first maximum slope. The third region 993a defines a third maximum slope and the fourth region 994a defines a fourth maximum slope that is less than the third maximum slope.

FIG. 9A also shows a tensile stress profile 982a positioned between the compressive stress profile 972a and the compressive stress profile 974a. The compressive stress profile 972a, the compressive stress profile 974a, and the tensile stress profile 982a together at least partially define an overall stress profile in a cover member, which may be through a thickness of the cover member. The overall stress profile shown in FIG. 9A is symmetric.

FIG.9B shows an example of asymmetric compressive stress profiles in a cover member. In the example of FIG. 9B, the compressive stress profile 972b extending from an exterior surface of the cover member is different from the compressive stress profile 974b extending from an interior surface of the cover member.

The compressive stress profile 972b has a depth of compression DOC_{9BE} that is greater than a depth of compression DOC_{9BI} of the compressive stress profile 974b. As compared to the example of FIG 9A, the stress profile 972b has a greater depth of compression DOC_{9BE} than the stress profile 972a. In some embodiments, the depth of compression DOC_{9BE} may be in a range that is greater than or equal to 30% or less than or equal to 60 % of a thickness of the cover member.

In the example of FIG. 9B, the compressive stress profile 972b has a compressive surface stress CS_{9BE} that is less than the compressive surface stress CS_{9BI} of the compressive stress profile 974b. This stress profile configuration may help provide a force balance within the cover member and limit warping due to the asymmetric strengthening. However, this example is not limiting and in other examples, the difference between the surface compressive stresses of compressive stress profiles extending from the exterior surface and the interior surface may be different than shown in FIG. 9B.

FIG. 9B also shows a tensile stress profile 982b positioned between the compressive stress profile 972b and the compressive stress profile 974b. The compressive stress profile 972b, the tensile stress profile 982b, and the compressive stress profile 974b together at least partially define an overall stress profile in a cover member, which may be through a thickness of the cover member.

The compressive stress profile 972b may be formed by a strengthening process that includes ion exchange and implantation and therefore may have similar properties to the compressive stress profile 872 of FIG. 8B and the compressive stress profiles 972a and 974a of FIG. 9A. For example, the compressive stress profile 972b may provide impact resistance to the exterior surface of the cover member by providing both crack and bending resistance . The compressive stress profile 972b includes a first compressive region 991b and a second region 992b.

The compressive stress profile 974b may provide bending resistance to the interior surface of the cover member. In some cases, the compressive stress profile 974b may be formed solely by an ion implantation operation. For example, the compressive stress profile 974b may be formed by implantation of ions. The ions implanted may be any of the ions previously discussed with respect to FIGs. 2 and 6A- 6B. In other cases, the compressive stress profile may be formed solely by an ion exchange operation. For example, the compressive stress profile 974b may be formed by introducing potassium ions into the cover member through ion exchange.

FIG. 10 shows a cross-sectional view of a contoured cover member. FIG. 10 may be an example of a cross-sectional view of the contoured cover member of the electronic device of FIG. 4 or of any other contoured cover member described herein. The cross-sectional view may be taken along line C-C in FIG. 4, along line B-B in FIG. 3 or along line A-A in FIG. 2. As shown in the example of FIG. 10, the cover member 1030 has a three-dimensional shape that includes a curved peripheral portion. The cover member defines an exterior surface 1042, an interior surface 1044, and a side surface 1046 that extends from the exterior surface 1042 to the interior surface 1044. The cover member 1030 may be an example of the cover member 430 of FIG. 4 and may be similar in thickness, materials, and other properties to the cover member 230.

As shown in FIG. 10, the cover member 1030 includes a curved first portion 1031 and a second portion 1032. Each of the curved first portion 1031 and the second portion 1032 may be strengthened by the techniques described herein. In some embodiments, a first compressive stress layer extending from at least a portion of the exterior surface 1042 and a second compressive stress layer extending from at least a portion of the interior surface 1044 each are formed through an ion-exchange operation and an ion implantation operation and may have similar features to those described for the compressive stress layers 762a, 762b, and 764a of FIGs. 7A and 7B and the compressive stress profile 872 of FIG. 8B.

The curved first portion 1031 defines a side surface 1046 of the cover member and is therefore an example of a curved peripheral portion of a cover member. In the example of FIG. 10, the curved first portion 1031 may curve towards an interior of the enclosure. The curved first portion 1031 of the cover member 1030 defines a curved exterior surface 1043 and a curved interior surface 1045. The curved exterior surface 1043 may alternately be referred to as a convex exterior surface or as a curved first exterior surface of the cover member 1030. The curved interior surface 1045 may alternately be referred to as a concave interior surface or as a curved first interior surface of the cover member 1030. The convex exterior surface 1043 is generally opposite the concave interior surface 1045 in the example of FIG. 10. The curved exterior surface 1043 may alternately be referred to as a curved exterior surface region of the exterior surface 1042 and the curved interior surface 1045 may alternately be referred to as a curved interior surface region of the interior surface 1044.

In some embodiments, the curved first portion 1031 of the cover member extends from a second portion 1032. The second portion 1031 of the cover member 1030 defines an exterior surface 1047 and an interior surface 1048. In some embodiments, a magnitude of the curvature of the exterior surface 1047 is less than a magnitude of the curvature of the exterior surface 1043 and a magnitude of the curvature of the interior surface 1048 is less than a magnitude of a curvature of the interior surface 1045. In the example of FIG. 10, each of the exterior surface 1047 and the interior surface 1048 is substantially flat (alternately, substantially planar). The exterior surface 1047 may alternately be referred to as a second exterior surface or as an exterior surface region of the exterior surface 1042. The interior surface 1048 may alternately be referred to as a second interior surface or as an interior surface region of the interior surface 1044.

FIG. 11 shows an example of an internal stress distribution in a peripheral portion of a contoured cover member. FIG. 11 is a non-limiting example of a compressive zone 1166 that produces an asymmetric stress profile across the thickness of the cover member 1130. The internal stress distribution shown in FIG. 11 may be an example of the internal stress distribution in detail area 11, 12 of FIG. 10. As shown in FIG. 11, the curved peripheral portion 1131 of the cover member 1130 includes a compressive zone 1166 that extends from the curved exterior surface 1143, the curved interior surface 1145, and the side surface 1146. As previously described with respect to FIG. 3, one or more parameters of the compressive stress zone 1166 may vary within the curved peripheral portion 1131. These parameters include, but are not limited to a depth of compression, a surface compressive stress, and a compressive stress profile of the compressive zone. In the example of FIG. 11, the compressive zone 1166 extends to a greater depth from the side surface 1146 than from the curved exterior surface 1143. The compressive zone 1166 also extends to a greater depth from the curved exterior surface 1143 than the curved interior surface 1145. The cover member 1130 also includes tensile zones 1186 and 1188, with tensile zone 1188 having a higher magnitude of tensile stress. The dashed line 1192 indicates a boundary between compressive and tensile stress.

FIG. 12 shows another example of an internal stress distribution in a peripheral portion 1231 of a contoured cover member. FIG. 12 is a non-limiting example of a compressive zone 1266 that produces a symmetric stress profile across the thickness of the cover member 1230. The compressive zone 1266 extends to a greater depth from the side surface 1246 than either the curved exterior surface 1243 or the curved interior surface 1245. The cover member 1230 also includes tensile zones 1286 and 1288, with tensile zone 1288 having a higher magnitude of tensile stress. The dashed line 1292 indicates a boundary between compressive and tensile stress.

FIG. 13 shows an example block diagram of components of an electronic device. The electronic device 1300 may be an example of the electronic device 100 or any other electronic device described herein. As shown in FIG. 13, the electronic device includes a display 1302, a processor 1304, a power source 1306, a sensor system 1310, an input/output mechanism 1312, memory 1308, and a system 1314 in communication with the elements 1302, 1304, 1306, 1308, 1310, 1312 and 1314.

In embodiments, an electronic device 1300 may include a display 1302. The display 1302 may include a liquid-crystal display (LCD), a light-emitting diode (LED) display, an LED-backlit LCD display, an organic light-emitting diode (OLED) display, an active layer organic light-emitting diode (AMOLED) display, an organic electroluminescent (EL) display, an electrophoretic ink display, or the like. If the display 1302 is a liquid-crystal display or an electrophoretic ink display, the display 1302 may also include a backlight component that can be controlled to provide variable levels of display brightness. If the display 1302 is an organic light-emitting diode or an organic electroluminescent-type display, the brightness of the display 1302 may be controlled by modifying the electrical signals that are provided to display elements. In addition, information regarding configuration and/or orientation of the electronic device may be used to control the output of the display as described with respect to input devices 1312. In some cases, the display is integrated with a touch and/or force sensor in order to detect touches and/or forces applied along an exterior surface of the device 1300.

The device 1300 also includes a processor 1304. The processor 1304 may be operably connected with a computer-readable memory 1308. The processor 1304 may be operatively connected to the memory 1308 component via an electronic bus or bridge. The processor 1304 may be implemented as one or more computer processors or microcontrollers configured to perform operations in response to computer-readable instructions. The processor 1304 may include a central processing unit (CPU) of the device 1300. Additionally, and/or alternatively, the processor 1304 may include other electronic circuitry within the device 1300 including application specific integrated chips (ASIC) and other microcontroller devices. The processor 1304 may be configured to perform functionality described in the examples above.

The device 1300 also includes a power source 1306. In some embodiments, the power source includes a battery that is configured to provide electrical power to the components of the electronic device 1300. The battery may include one or more power storage cells that are linked together to provide an internal supply of electrical power. The battery may be operatively coupled to power management circuitry that is configured to provide appropriate voltage and power levels for individual components or groups of components within the electronic device 1300. The battery, via power management circuitry, may be configured to receive power from an external source, such as an alternating current power outlet. The battery may store received power so that the electronic device 1300 may operate without connection to an external power source for an extended period of time, which may range from several hours to several days.

The memory 1308 may include a variety of types of non-transitory computer-readable storage media, including, for example, read access memory (RAM), read-only memory (ROM), erasable programmable memory (e.g., EPROM and EEPROM), or flash memory. The memory 1308 is configured to store computer-readable instructions, sensor values, and other persistent software elements.

The device 1300 also includes a sensor system 1310. The sensor system 1310 may include one or more sensors or sensor components, such as a force sensor, a capacitive sensor, an accelerometer, a barometer, a gyroscope, a proximity sensor, a light sensor, a microphone, an acoustic sensor, a light sensor (including ambient light, infrared (IR) light, ultraviolet (UV) light), an optical facial recognition sensor, a depth measuring sensor (e.g., a time of flight sensor), a health monitoring sensor (e.g., an electrocardiogram (erg) sensor, a heart rate sensor, a photoplethysmogram (ppg) sensor, a pulse oximeter, a biometric sensor (e.g., a fingerprint sensor), or other types of sensing device. In some cases, the device 1300 includes a sensor array (also referred to as a sensing array) which includes multiple sensors. For example, a sensor array may include an ambient light sensor, a Lidar sensor, and a microphone. In additional examples, one or more camera components may also be associated with the sensor array. The sensor system 1310 may be operably coupled to processing circuitry. In some embodiments, the sensors may detect deformation and/or changes in configuration of the electronic device and be operably coupled to processing circuitry that controls the display based on the sensor signals. In some implementations, output from the sensor system is used to reconfigure the display output to correspond to an orientation or folded/unfolded configuration or state of the device. Example sensors for this purpose include accelerometers, gyroscopes, magnetometers, and other similar types of position/orientation sensing devices.

The input/output mechanism 1312 may include one or more input devices and one or more output devices. The input device(s) are devices that are configured to receive input from a user or the environment. An input device may include, for example, a push button, a touch-activated button, a capacitive touch sensor, a touch screen (e.g., a touch-sensitive display or a force-sensitive display), a capacitive touch button, dial, crown, or the like. In some embodiments, an input device may provide a dedicated or primary function, including, for example, a power button, volume buttons, home buttons, scroll wheels, and camera buttons. The one or more output devices include the display 1302 that renders visual information, which may be generated by the processor 1304. The one or more output devices may also include one or more speakers to provide audio output and/or one or more haptic devices that are configured to produce a haptic or tactile output along an exterior surface of the device 1300. The input/output mechanism may also include a communication port or a communication channel. A communication channel may include one or more wireless interface(s) that are adapted to provide communication between the processor 1304 and an external device, one or more antennas (e.g., antennas that include or use housing components as radiating members), communications circuitry, firmware, software, or any other components or systems that facilitate wireless communications with other devices.

The electronic device 1300 also includes a system 1314 in communication with the elements 1302, 1304, 1306, 1308, 1310, and 1312. In some examples, the system 1314 includes circuitry, such as electronic buses and/or bridges. The system 1314 may also include application specific integrated chips (ASIC) and other microcontroller devices.

As used herein, use of the term "substantially the same as" or "substantially equal to" with respect to two values refers to a difference of less than 10% between the two values. Use of the terms "substantially free from" or "substantially free of" refers to a concentration of less than 0.01%.

The following discussion applies to the electronic devices described herein to the extent that these devices may be used to obtain personally identifiable information data. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

### Additional Statements

There is provided an electronic device comprising a display, a cover positioned over the display and comprising a cover member formed from an ion-exchangeable silicate material comprising lithium ions, the cover member comprising a first compressive stress region extending from an exterior surface of the cover member to a first depth, the first compressive stress region including a first concentration of sodium ions and a first concentration of alkali metal ions that are larger than potassium ions and that are embedded in the cover member and a second compressive stress region extending inward from the first compressive stress region to a second depth, the second compressive stress region including a second concentration of the sodium ions and substantially free of the alkali metal ions.

Preferably, wherein the cover member further comprises a third compressive stress region extending from an interior surface of the cover member to a third depth, the third compressive stress region including a third concentration of the sodium ions and a second concentration of the alkali metal ions that are larger than potassium ions and that are embedded in the cover member, a fourth compressive stress region extending inward from the second compressive stress region to a fourth depth, the fourth compressive stress region including a fourth concentration of sodium ions and substantially free of the alkali metal ions, and a tensile stress region positioned between the second and the fourth compressive stress regions and including the lithium ions.

Preferably, wherein the third depth and the first depth differ by no more than 10% and the fourth depth and the second depth differ by no more than 10%.

Preferably, wherein the ion-exchangeable silicate material comprising the lithium ions is a glass ceramic material, the first compressive stress region defines a first compressive stress at the exterior surface, the third compressive stress region defines a second compressive stress at the interior surface, and each of the first compressive stress and the second compressive stress is greater than 500 MPa.

Preferably, wherein the cover member defines a first compressive stress profile that extends from the exterior surface of the cover member to the second depth and a second compressive stress profile that extends from the interior surface of the cover member to the fourth depth, the first compressive stress profile defines a first maximum slope in the first compressive stress region and a second maximum slope in the second compressive stress region, the second maximum slope less than the first maximum slope, and the second compressive stress profile defines a third maximum slope in the third compressive stress region and a fourth maximum slope in the fourth compressive stress region, the fourth maximum slope less than the third maximum slope.

Preferably, wherein the first maximum slope and the third maximum slope differ by no more than 10%.

Preferably, wherein the second depth defines a first depth of compression from the exterior surface, the cover member further comprises a third compressive stress region extending from an interior surface of the cover member to a second depth of compression that is less than the first depth of compression, the third compressive stress region including a second concentration of the alkali metal ions that are larger than potassium ions and that are embedded in the cover member, and a tensile stress region positioned between the second and the third compressive stress regions and including the lithium ions.

There is provided an electronic device comprising a housing, a cover coupled to the housing and comprising a cover member formed from an alkali aluminosilicate material, the cover member comprising an ion-modified layer comprising a first region extending from a surface of the cover member to an implantation depth of alkali metal ions that are larger than potassium ions, the first region including the alkali metal ions and a first concentration of sodium ions and a second region extending from the first region to a layer depth of the ion-modified layer and comprising a second concentration of the sodium ions and a core region extending from the second region and comprising lithium ions and a display positioned under the cover member.

Preferably, wherein the surface of the cover member is an exterior surface of the cover member, the ion-modified layer is a first ion-modified layer, the layer depth is a first layer depth; and the implantation depth is a first implantation depth, the first ion-modified layer defines a first maximum concentration of the alkali metal ions, and the cover member further comprises a second ion-modified layer extending from an interior surface that is opposite the exterior surface to a second layer depth, the second ion-modified layer defining a second maximum concentration of the alkali metal ions and a second implantation depth.

Preferably, wherein each of the first implantation depth and the second implantation depth of the alkali metal ions is greater than zero and less than or equal to 10 micrometers, and the second maximum concentration of the alkali metal ions differs from the first maximum concentration of the alkali metal ions by no more than 10%.

Preferably, wherein the first layer depth is greater than or equal to 30% and less than or equal to 60% of a thickness of the cover member and the second layer depth is less than the first layer depth.

Preferably, wherein the second ion-modified layer comprises a third region extending from the surface of the cover member to the second implantation depth, the third region including the second maximum concentration of the alkali metal ions and a third concentration of the sodium ions, and a fourth region extending from the third region to the second layer depth, the fourth region including a fourth concentration of the sodium ions.

Preferably, further comprising a third ion-modified layer extending from a side surface of the cover member to a third layer depth, the third ion-modified layer including a fifth concentration of the sodium ions.

Preferably, wherein the surface is a first surface positioned within a peripheral portion of the cover member and the cover member further defines an ion-exchanged layer extending from a second surface positioned within a central portion of the cover member, the ion-exchanged layer comprising the sodium ions and substantially free of the alkali metal ions.

Preferably, wherein the ion-exchangeable silicate material is an aluminosilicate glass material, and the ion-modified layer defines a compressive stress at the surface of the cover member that is greater than or equal to 1 GPa.

There is provided an electronic device comprising a display, a housing, a cover coupled to the housing, positioned over the display, and comprising a cover member formed from an ion-exchangeable silicate material, the cover member comprising a first compressive stress layer extending from an exterior surface of the cover member to a first depth of compression, the first compressive stress layer defining a first compressive stress at the exterior surface and comprising a first set of alkali metal ions that are larger than potassium ions, the first set of alkali metal ions defining a first implantation depth within the cover member that is less than the first depth of compression and a first set of sodium ions, and a second compressive stress layer extending from an interior surface of the cover member to a second depth of compression, the interior surface opposite the exterior surface and the second compressive stress layer defining a second compressive stress at the interior surface and comprising a second set of the alkali metal ions defining a second implantation depth within the cover member that is less than the second depth of compression and a second set of sodium ions, and a tensile stress region positioned between the first and the second compressive stress layers and comprising lithium ions.

Preferably, wherein the cover member is a contoured cover member, the exterior surface is a convex exterior surface, and the interior surface is a concave interior surface.

Preferably, wherein each of the first depth of compression and the second depth of compression is in a range from 15% to 30% of a thickness of the cover member.

Preferably, wherein the second compressive stress at the interior surface is greater than the first compressive stress at the exterior surface.

Preferably, wherein the first compressive stress layer defines a first compressive stress profile comprising a first region extending from the exterior surface and defining a first maximum slope and a second region extending from the first region to the first depth of compression and defining a second maximum slope that is less than the first maximum slope, and the second compressive stress layer defines a second compressive stress profile comprising a third region extending from the interior surface and defining a third maximum slope and a fourth region extending from the third region to the second depth of compression and defining a fourth maximum slope that is less than the third maximum slope.

Preferably, wherein the ion-exchangeable silicate material is an aluminosilicate glass material and each of the first compressive stress at the exterior surface and the second compressive stress at the interior surface is greater than or equal to 1 GPa.

## Claims

1. An electronic device comprising:
a display;
a cover positioned over the display and comprising a cover member formed from an ion-exchangeable silicate material comprising lithium ions, the cover member comprising:
a first compressive stress region extending from an exterior surface of the cover member to a first depth, the first compressive stress region including:
a first concentration of sodium ions; and
a first concentration of alkali metal ions that are larger than potassium ions and that are embedded in the cover member; and
a second compressive stress region extending inward from the first compressive stress region to a second depth, the second compressive stress region including a second concentration of the sodium ions and substantially free of the alkali metal ions.

2. The electronic device of claim 1, wherein the cover member further comprises:
a third compressive stress region extending from an interior surface of the cover member to a third depth, the third compressive stress region including:
a third concentration of the sodium ions; and
a second concentration of the alkali metal ions that are larger than potassium ions and that are embedded in the cover member;
a fourth compressive stress region extending inward from the second compressive stress region to a fourth depth, the fourth compressive stress region including a fourth concentration of sodium ions and substantially free of the alkali metal ions; and
a tensile stress region positioned between the second and the fourth compressive stress regions and including the lithium ions.

3. The electronic device of claim 2, wherein:
the third depth and the first depth differ by no more than 10%; and
the fourth depth and the second depth differ by no more than 10%.

4. The electronic device of claim 2 or claim 3, wherein:
the ion-exchangeable silicate material comprising the lithium ions is a glass ceramic material;
the first compressive stress region defines a first compressive stress at the exterior surface;
the third compressive stress region defines a second compressive stress at the interior surface; and
each of the first compressive stress and the second compressive stress is greater than 500 MPa.

5. The electronic device of any of claims 2 to 4, wherein:
the cover member defines a first compressive stress profile that extends from the exterior surface of the cover member to the second depth and a second compressive stress profile that extends from the interior surface of the cover member to the fourth depth;
the first compressive stress profile defines a first maximum slope in the first compressive stress region and a second maximum slope in the second compressive stress region, the second maximum slope less than the first maximum slope; and
the second compressive stress profile defines a third maximum slope in the third compressive stress region and a fourth maximum slope in the fourth compressive stress region, the fourth maximum slope less than the third maximum slope.

6. The electronic device of claim 5, wherein the first maximum slope and the third maximum slope differ by no more than 10%.

7. The electronic device of any preceding claim, wherein:
the second depth defines a first depth of compression from the exterior surface;
the cover member further comprises a third compressive stress region extending from an interior surface of the cover member to a second depth of compression that is less than the first depth of compression, the third compressive stress region including a second concentration of the alkali metal ions that are larger than potassium ions and that are embedded in the cover member; and
a tensile stress region positioned between the second and the third compressive stress regions and including the lithium ions.

8. An electronic device comprising:
a housing;
a cover coupled to the housing and comprising a cover member formed from an alkali aluminosilicate material, the cover member comprising:
an ion-modified layer comprising:
a first region extending from a surface of the cover member to an implantation depth of alkali metal ions that are larger than potassium ions, the first region including:
the alkali metal ions; and
a first concentration of the sodium ions; and
a second region extending from the first region to a layer depth of the ion-modified layer and comprising a second concentration of the sodium ions; and
a core region extending from the second region and comprising lithium ions; and
a display positioned under the cover member.

9. The electronic device of claim 8, wherein:
the surface of the cover member is an exterior surface of the cover member;
the ion-modified layer is a first ion-modified layer, the layer depth is a first layer depth; and the implantation depth is a first implantation depth;
the first ion-modified layer defines a first maximum concentration of the alkali metal ions; and
the cover member further comprises a second ion-modified layer extending from an interior surface that is opposite the exterior surface to a second layer depth, the second ion-modified layer defining a second maximum concentration of the alkali metal ions and a second implantation depth.

10. The electronic device of claim 9, wherein:
each of the first implantation depth and the second implantation depth of the alkali metal ions is greater than zero and less than or equal to 10 micrometers; and
the second maximum concentration of the alkali metal ions differs from the first maximum concentration of the alkali metal ions by no more than 10%.

11. The electronic device of claim 9 or claim 10, wherein:
the first layer depth is greater than or equal to 30% and less than or equal to 60% of a thickness of the cover member; and
the second layer depth is less than the first layer depth.

12. The electronic device of any of claims 9 to 11, wherein the second ion-modified layer comprises:
a third region extending from the surface of the cover member to the second implantation depth, the third region including:
the second maximum concentration of the alkali metal ions; and
a third concentration of the sodium ions; and
a fourth region extending from the third region to the second layer depth, the fourth region including a fourth concentration of the sodium ions.

13. The electronic device of claim 12, further comprising a third ion-modified layer extending from a side surface of the cover member to a third layer depth, the third ion-modified layer including a fifth concentration of the sodium ions.

14. The electronic device of any of claims 8 to 13, wherein:
the surface is a first surface positioned within a peripheral portion of the cover member; and
the cover member further defines an ion-exchanged layer extending from a second surface positioned within a central portion of the cover member, the ion-exchanged layer comprising the sodium ions and substantially free of the alkali metal ions.

15. The electronic device of any of claims 8 to 14, wherein:
the ion-exchangeable silicate material is an aluminosilicate glass material; and
the ion-modified layer defines a compressive stress at the surface of the cover member that is greater than or equal to 1 GPa.
